# FASCICULE DE BREVET EUROPEEN

(11) **EP 2 588 395 B1**
(45) Date de publication et mention de la délivrance du brevet: **22.04.2020**
(21) Numéro de dépôt: 11725153.8
(22) Date de dépôt: 11.05.2011
(51) Int. Cl.: B67B 3/064, B65G 47/256, B65G 47/14

(54) **DISPOSITIF DE PREPARATION D'ELEMENTS DE BOUCHAGE**
VORRICHTUNG ZUR REPARATUR VON DICHTUNGSELEMENTEN
DEVICE FOR PREPARING SEALING ELEMENTS

(30) Priorité: 29.06.2010 FR 1055200
(43) Date de publication de la demande: 08.05.2013
(73) Titulaire: Sidel Engineering & Conveying Solutions, 67116 Reichstett (FR)
(72) Inventeur: LOPEZ, Rémy, F-76930 Octeville-sur-Mer (FR); PETROVIC, Zmaj, F-76930 Octeville-sur-Mer (FR); LAMOLY, David, F-76930 Octeville-sur-Mer (FR)
(74) Mandataire: Sidel Group
(86) Numéro de dépôt international: PCT/FR2011/051054
(87) Numéro de publication internationale: WO 2012/001251

(56) Documents cités:
- DE-B- 1 013 194
- DE-U1- 8 914 794
- GB-A- 681 624
- US-A- 2 176 659
- US-A- 3 086 639
- US-A- 3 095 957
- US-A- 3 750 801
- US-A- 4 879 025

## Description

L'invention concerne le domaine de la préparation d'éléments de bouchage tels que des bouchons, capsules ou autres, pour alimenter un poste de bouchage sur une machine du type soutireuse, par exemple.

L'invention concerne, plus particulièrement, un dispositif qui permet, notamment, de réaliser une meilleure préparation de ces éléments de bouchage creux. Dans la suite de la description de l'invention, il sera essentiellement question de bouchons, pour simplifier.

La préparation des bouchons s'effectue au moyen d'une machine d'apprêt du type à tapis, communément appelée « cap feeder », comme décrit dans le document FR 2 876 991, ou encore, d'une machine du type à bol vibrant.

A la sortie de ces machines, le bouchon est censé être apprêté, c'est-à-dire qu'il est bien positionné pour être livré à la goulotte d'alimentation gravitaire du poste de bouchage. Or, on constate qu'il existe dans cette goulotte d'alimentation un pourcentage relativement modeste de bouchons mal orientés ou de bouchons non conformes, c'est-à-dire des bouchons qui, par exemple, n'ont pas de bague d'inviolabilité.

De plus, la livraison des bouchons bien orientés est effectuée par la machine d'apprêt et elle est généralement organisée pour s'effectuer à une certaine hauteur qui correspond au niveau de l'entrée de la goulotte d'alimentation gravitaire du poste de bouchage.

C'est d'ailleurs l'objet du document précité que d'offrir un dispositif de convoyage pour bouchons dont l'intérêt est de permettre une livraison des bouchons à la hauteur requise quel que soit le type de machine d'apprêt, qu'il s'agisse du type à tapis ou d'un bol vibrant.

Le dispositif de convoyage pneumatique décrit dans ce document FR 2 876 991 utilise de l'air comprimé pour propulser les bouchons, c'est-à-dire une source d'énergie relativement onéreuse et qui, de plus, n'est pas toujours compatible avec certaines installations comme les installations aseptisées où la poussière n'est pas tolérée.

Le document US 2,176,659 divulgue un dispositif selon le préambule de la revendication 1. Il s'agit d'un appareil d'orientation et de sélection de capsules, où des crochets viennent saisir les capsules mal orientées pour les diriger dans un canal d'évacuation.

La présente invention propose un dispositif qui vient compléter ces machines d'apprêt pour garantir une parfaite préparation des bouchons avant de les livrer au poste de bouchage, lequel dispositif effectue une opération additionnelle de sélection et de tri afin d'éliminer les éventuels bouchons mal orientés et/ou les bouchons non conformes qui sont dans la file des bouchons sortant de ladite machine d'apprêt.

Un autre but de l'invention est de permettre, grâce au dispositif de sélection et de tri selon l'invention, d'apporter une fonction complémentaire qui rejoint celle qui était détaillée dans le document FR 2 876 991 précité. En effet le dispositif de sélection et de tri selon l'invention fait également office de convoyeur et il offre la possibilité de livrer les bouchons à la hauteur requise, c'est-à-dire à une hauteur qui correspond à celle de l'entrée de la goulotte d'alimentation gravitaire du poste de bouchage, à partir d'une machine d'apprêt à tapis ou même d'une machine à bol vibrant.

L'invention concerne un dispositif de sélection et de tri pour des éléments de bouchage - ou bouchons-creux, destinés à un poste de bouchage. Le dispositif se présente sous la forme d'une goulotte formée de deux portions : une portion d'entrée et une portion de sortie et, entre ces deux portions, un canal de transit en arc de cercle qui comporte une fenêtre d'éjection. La portion de sortie est destinée à être raccordée au poste de bouchage. Le canal enveloppe partiellement une roue munie d'encoches qui sont adaptées à la taille desdits bouchons, la roue est associée à des moyens en forme de doigts qui ont pour fonction de maintenir lesdits bouchons lors de leur passage devant ladite fenêtre d'éjection, dans leur encoche respective, lorsqu'ils sont bien orientés et non défectueux, la portion de sortie étant destinée à conduire lesdits bouchons bien orientés et non défectueux.

Avantageusement, la fenêtre d'éjection est située en partie basse du dispositif, de manière que les bouchons qui arrivent au regard de la fenêtre d'éjection et qui ne sont pas maintenus par un doigt, tombent sous l'effet de leur propre poids. En particulier, la fenêtre d'éjection est située en partie basse du canal de transit.

Les encoches de la roue peuvent être de forme semi-circulaires.

Avantageusement, la roue est apte à guider les bouchons vers la portion de sortie sur une partie du canal de transit s'étendant de part et d'autre de la fenêtre d'éjection.

Avantageusement, la portion d'amenée est apte à guider les bouchons sur une file unique et s'étend au dessus du canal de transit. Cela permet à la portion d'amenée de servir d'accumulateur à bouchon. Cela permet que le dispositif de sélection et de tri soit disposé en série avec un autre dispositif de mise en ligne des bouchons, pour fournir un tri éventuellement additionnel.

Toujours selon l'invention, les doigts de maintien des bouchons dans leurs encoches respectives sont mobiles entre deux positions stables : - une position stable active de maintien desdits bouchons dans leurs encoches, selon laquelle une extrémité du doigt pénètre dans le creux dudit bouchon, et - une position stable inactive selon laquelle lesdits bouchons, , ne sont pas maintenus.

Avantageusement, les doigts sont aptes à entrer dans le creux d'un bouchon donné avant que ledit bouchon passe devant la fenêtre d'éjection.

Selon l'invention, la position inactive d'un doigt est à une distance transversale non nulle du canal de transit de manière que le bouchon correspondant n'est absolument pas maintenu par le doigt.

Avantageusement, la position stable inactive est atteinte automatiquement par réaction lorsque l'extrémité du doigt correspondant bute sur un bouchon retourné, lequel bouchon empêche ladite extrémité de pénétrer dans le creux dudit bouchon et provoque un mouvement de retrait immédiat dudit doigt empêché, jusqu'à ladite position stable inactive.

Selon une autre disposition de l'invention, le dispositif de sélection et de tri comprend un mécanisme positif d'entraînement de la roue à encoches et un flasque porte-doigts. Avantageusement, le flasque porte-doigts est disposé et fixé à distance de ladite roue, sur son arbre d'entraînement.

Avantageusement, les doigts sont amenés dans ladite position stable active par rapport à la roue, avant d'être susceptibles de pénétrer dans le creux d'un bouchon du canal de transit.

Avantageusement, le canal de transit est délimité par des surfaces de glissement constituées, d'une part, d'une paroi intérieure et d'une paroi extérieure qui s'étendent en arc de cercle en regard d'une partie de la périphérie de la roue à encoches, ladite paroi extérieure étant interrompue au niveau de la fenêtre d'éjection, et, d'autre part, d'une paroi de fond et d'une paroi frontale parallèle à ladite paroi de fond, laquelle paroi frontale, en forme de glissière, est destinée à guider le côté creux des éléments de bouchage.

Selon une disposition optionnelle de l'invention, l'axe commun à la roue à encoches et au flasque porteur des doigts est incliné par rapport à la normale de la paroi de fond, dans une direction telle que le plan du cercle des extrémités desdits doigts coupe la surface de glissement de la glissière frontale selon une ligne qui passe nettement au-dessus des extrémités de la fenêtre d'éjection, c'est-à-dire que les doigts de maintien pénètrent le creux des bouchons au fur et à mesure de la progression desdits bouchons dans le canal de transit et ils en sortent après le passage de ladite fenêtre.

Avantageusement, le flasque porte-doigts comprend deux disques en matériau magnétique qui sont parallèles entre eux et qui sont munis de moyens de guidage des doigts de maintien, lesquels doigts de maintien sont constitués chacun d'une broche en matériau amagnétique qui est montée libre en translation dans l'un au moins des disques selon une direction axiale, et chaque doigt comporte un aimant permanent qui est fixé sur ladite broche, lequel doigt, avec son aimant, flotte entre les deux disques.

Avantageusement, le doigt de maintien comprend un espaceur en matériau amagnétique disposé axialement entre l'aimant permanent et chacun des deux disques, lequel espaceur permet de régler la distance de l'aimant par rapport à chaque disque, ladite distance étant plus grande entre ledit aimant et le disque côté bouchons que celle entre ledit aimant et l'autre disque.

Avantageusement, le dispositif de sélection et de tri comprend une came de réarmement des doigts de maintien, laquelle came de réarmement est apte à ramener des doigts de maintien qui sont situés hors du secteur de la fenêtre d'éjection depuis la position stable inactive jusqu'à la position stable active de maintien.

Avantageusement, les doigts de maintien présentent chacun une extrémité de réarmement qui est à l'opposé de l'extrémité de maintien, lesquelles extrémités de réarmement se situent, quand les extrémités de maintien sont inactives, dans un plan qui coupe le plan de la came de réarmement au-dessus du niveau des extrémités de la fenêtre d'éjection, provoquant la remise en position desdits doigts en question, de façon automatique, au fur et à mesure de leur rotation avec la roue à encoches et de leur contact avec ladite came de réarmement.

Avantageusement, la came de réarmement se présente sous la forme d'un disque qui est libre en rotation, parallèle à la paroi de fond.

Le dispositif de sélection et de tri peut faire office de convoyeur avec sa roue à encoches qui permet de capter individuellement chaque bouchon et de le propulser, lequel convoyeur comprend une goulotte de sortie dont la hauteur est adaptable pour livrer les bouchons à un niveau approprié par le biais de tronçons adaptables. Le niveau approprié dépend du niveau de l'entrée de la goulotte d'alimentation du poste de bouchage. Le dispositif de sélection et de tri peut comprendre une goulotte d'amenée dont la hauteur est choisie de façon à accumuler une certaine quantité de bouchons et de façon à pouvoir asservir le fonctionnement de ladite roue à encoches. L'asservissement comprend un système de détection, par le biais d'un capteur, de la présence de bouchons. Le système de détection est situé en amont de ladite roue à encoches, sur ladite goulotte d'amenée.

Avantageusement, la partie inférieure de la paroi de fond comporte un panneau qui est escamotable pour permettre la vidange du canal et, en particulier, le retrait des bouchons qui sont maintenus par les doigts et, éventuellement, ceux qui sont dans la goulotte d'amenée et/ou la goulotte de sortie, lequel panneau est monté mobile par rapport à la paroi de fond, au moyen d'une charnière, par exemple, et il est actionné par un organe de manœuvre comme une simple vis qui est interposée entre ledit panneau et une patte solidaire de ladite paroi de fond.

Selon un mode de réalisation, le dispositif comprend un mécanisme d'adaptation conçu pour déplacer la paroi frontale par rapport à la paroi de fond selon une direction d'adaptation sensiblement perpendiculaire à la paroi de fond, de manière à faire varier une hauteur du canal de transit entre une hauteur maximum et une hauteur minimum.

Avantageusement, le mécanisme d'adaptation est conçu pour déplacer d'une même distance d'adaptation la paroi frontale, le flasque porte-doigts, et la came de réarmement.

La présente description divulgue aussi un dispositif pour des bouchons creux, comprenant une goulotte apte à guider les bouchons sur une file unique, le dispositif étant équipé d'un moyen de propulsion des bouchons le long de la goulotte vers une portion de sortie de la goulotte, laquelle portion de sortie présente au moins une partie d'élévation s'élevant au dessus du moyen de propulsion, laquelle partie est délimitée par au moins une paroi de fond fixe et deux parois latérales en regard l'une de l'autre et s'étendant chacune le long d'une surface de guidage, la paroi de fond étant destinée à recevoir le fond des bouchons et les parois latérales étant destinées à guider des bords desdits bouchons; au moins l'une des parois latérales étant mobile par rapport à la paroi de fond en un mouvement de glissement vers le haut le long de la même surface de guidage.

Avantageusement, ladite partie d'élévation s'étend à une hauteur au-dessus du moyen de propulsion supérieure à 100 fois la largeur de guidage latéral de la goulotte, par exemple supérieure à 2 m, notamment comprise entre 2,5 m et 5 m, en particulier comprise entre 2,7 m et 4 m.

Avantageusement, la partie d'élévation peut être rectiligne. Les surfaces latérales de guidage peuvent être sensiblement planes.

Avantageusement, la partie d'élévation peut être sensiblement verticale.

Avantageusement, le moyen de propulsion des bouchons peut comprendre une roue à encoche et un moyen d'entraînement positif en rotation de la roue à encoche.

Avantageusement, la paroi mobile est constituée par une portion d'une courroie.

Avantageusement, le dispositif comprend un mécanisme d'entraînement positif de ladite paroi latérale mobile, conçu pour que la vitesse de ladite paroi latérale mobile soit supérieure la vitesse de déplacement des bouchons dans la portion de sortie imposée par le moyen de propulsion.

Avantageusement, la vitesse de ladite paroi latérale mobile est comprise entre 1.05 et 1.3 fois la vitesse desdits bouchons dans la goulotte.

La présente invention sera mieux comprise à l'étude de la description détaillée de quelques modes de réalisation pris à titre d'exemples nullement limitatifs et illustrés par les dessins annexés sur lesquels :
- la figure 1 montre une installation comprenant une machine d'apprêt et un poste de bouchage avec, entre les deux, un dispositif de sélection et de tri additionnel selon l'invention, qui est installé sur la goulotte d'alimentation de ce poste de bouchage,
- la figure 2 montre une autre machine d'apprêt qui est équipée du dispositif selon l'invention, lequel dispositif combine l'opération de sélection avec une opération de convoyage et d'élévation des bouchons,
- la figure 3 est une vue partielle de face du dispositif qui équipe les machines représentées figures 1 et 2, avec une demi-coupe, sur la partie droite de la figure, selon 3-3 de la figure 4,
- la figure 4 est une coupe partielle selon 4-4 de la figure 3, montrant les positions respectives d'un bouchon, d'un doigt et de la roue à encoches au moment de l'intégration du bouchon dans la roue à encoches,
- la figure 5 est une coupe selon 5-5 de la figure 3 montrant une autre position du doigt et de la roue à encoches par rapport au bouchon, dans le canal de transit,
- la figure 6 illustre l'entrée du canal de transit et les bouchons qui sont en interaction avec la roue à encoches,
- la figure 7 est une élévation schématique en coupe, selon 7-7 de la figure 3, du dispositif de sélection en fonctionnement normal,
- la figure 8 est une représentation partielle du dispositif de sélection de la figure 7, en cas de détection d'une anomalie et, en particulier, en cas de détection d'un bouchon mal orienté,
- la figure 9 est également une représentation partielle du dispositif de sélection de la figure 7, en cas de détection d'un bouchon non conforme, c'est-à-dire un bouchon bien orienté, ou mal orienté, mais sans sa bague d'inviolabilité par exemple,
- la figure 10 est une élévation partielle en coupe montrant, notamment, un doigt de maintien qui coopère avec le mécanisme de verrouillage de l'une ou l'autre des positions stables dudit doigt,
- la figure 11 représente un doigt de maintien,
- la figure 12 est une élévation en coupe d'un autre mode de réalisation du système de déplacement des doigts de maintien pour les faire passer de leur position active de maintien des bouchons à une position inactive,
- la figure 13 est une coupe longitudinale d'un doigt de maintien, illustrant une position stable inactive,
- la figure 14 est également une coupe longitudinale d'un doigt de maintien, illustrant une position stable active de maintien d'un bouchon,
- la figure 15 est une élévation en coupe d'un autre mode de réalisation du dispositif apte à s'adapter à différents formats de bouchons,
- la figure 16 montre une machine d'apprêt équipée d'un mode de réalisation du dispositif adapté à propulser vers le haut des bouchons ayant des bords striés,
- les figures 17a et 17b montrent une coupe horizontale selon le plan XVII-XVII de la figure 16 des portions d'amenée et de sortie pour deux formats de bouchons,
- les figures 18a et 18b illustrent la remontée des bouchons dans une portion d'élévation du dispositif,

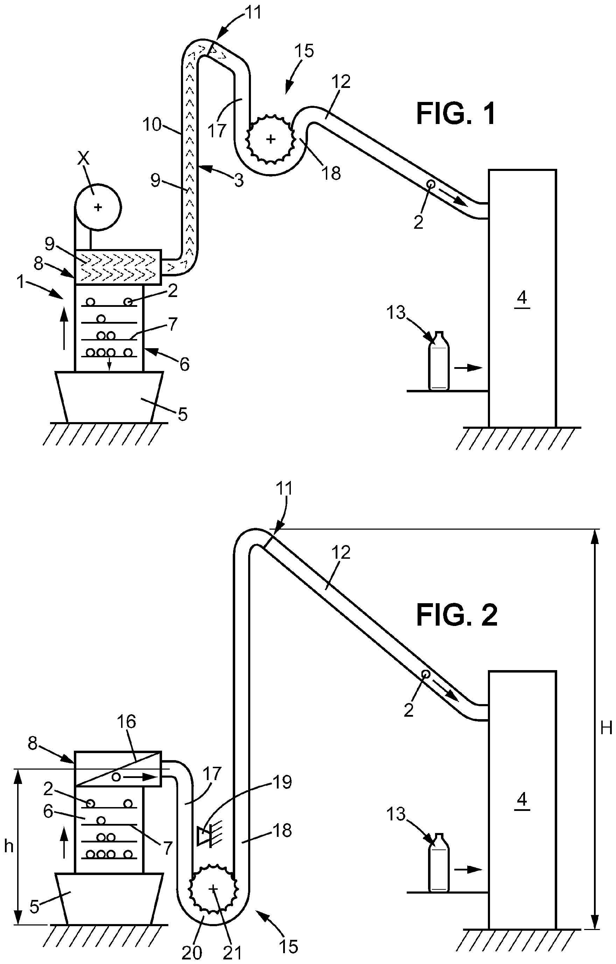

La figure 1 illustre une installation comprenant une machine **1** d'apprêt et de triage, du type de celle qui est décrite dans le document FR 2 876 991 précité. Les bouchons **2** sont acheminés par la goulotte verticale du convoyeur **3** pneumatique jusqu'à un poste **4** de bouchage qui, généralement, se situe directement au niveau d'une soutireuse.

Les bouchons 2 sont disposés en vrac dans une trémie **5** de la machine 1 d'apprêt. Un tapis **6** sans fin légèrement incliné vers l'arrière est équipé d'une série de tasseaux **7** horizontaux. Ces tasseaux 7 forment ou comportent des rainures pour capter et emmener les bouchons 2 et, après un passage par un poste de tri, du genre dos d'âne, seuls les bouchons 2 bien orientés sont conservés dans leur rainure, sur le tasseau 7. Les bouchons 2 mal orientés retombent automatiquement dans la trémie 5 du fait que leur centre de gravité n'est plus dans le périmètre porteur du tasseau 7. Ainsi, seuls les bouchons 2 correctement orientés sont emmenés vers le haut par le tapis 6 trieur jusqu'à une zone **8** d'évacuation.

La zone 8 d'évacuation est munie d'ouïes **9** pneumatiques poussant les bouchons 2 vers la droite de la figure jusqu'à ce qu'ils pénètrent dans une goulotte **10** unifilaire équipée également d'ouïes 9 pneumatiques. La goulotte 10 unifilaire équipée de ses ouïes 9 pneumatiques permet de remonter les bouchons 2 à un niveau qui correspond à l'entrée **11** d'une goulotte **12** qui est en forme de rampe inclinée et le long de laquelle les bouchons s'écoulent par gravité et desservent le poste 4 de bouchage. Cette goulotte 12 fait aussi office d'accumulateur et sa longueur peut, par conséquent, être relativement importante.

Le poste 4 de bouchage reçoit également un convoyeur de récipients **13** remplis et vient assembler un bouchon 2 sur chacun des récipients 13 remplis. Généralement, les machines d'apprêt et de triage ainsi que les soutireuses sont disposées sur le sol de l'installation industrielle.

La goulotte 12 comporte, à sa partie amont, un dispositif **15** de sélection et de tri qui a pour fonction de compléter l'opération de tri effectuée, normalement, par la machine 1 d'apprêt.

Ce dispositif 15 de sélection est installé au niveau de l'entrée 11 de la goulotte 12 d'alimentation du poste 4 de bouchage. Toutefois, dans certains cas et selon le type de machine d'apprêt, ce dispositif 15 de sélection peut, comme représenté figure 2, comporter une fonction supplémentaire de convoyage et réaliser une élévation des bouchons pour les livrer, selon les besoins, au niveau requis qui correspond à l'entrée de la goulotte 12 d'alimentation du poste 4 de bouchage.

Sur les différentes figures, les mêmes références désignent des éléments identiques ou similaires.

Comme illustré figure 2, le dispositif 15 qui combine les fonctions de sélection et de convoyage, permet de relier la zone 8 d'évacuation de la machine 1 d'apprêt au poste 4 de bouchage. La zone 8 d'évacuation peut fonctionner différemment de la précédente détaillée figure 1 ; en effet, comme illustrés, les bouchons 2 qui sont emmenés par les tasseaux 7 sont éjectés de ces derniers au moyen d'une entrave **16** et ils sont orientés vers une première goulotte qui fait office de goulotte **17** d'amenée pour le dispositif 15, par exemple.

Le dispositif 15 de sélection et de convoyage s'interpose entre cette goulotte 17 d'amenée qui fait aussi office d'accumulateur, et une goulotte **18** de sortie qui remonte verticalement jusqu'à l'entrée 11 de la goulotte 12 d'alimentation du poste 4 de bouchage. Cette goulotte 18 joue le même rôle que la goulotte 10 du cap feeder de la figure 1 mais avec des moyens différents pour la propulsion des bouchons 2, des moyens qui sont adaptés à ce type de machine d'apprêt.

Pour le bon fonctionnement du dispositif 15, la goulotte 17 d'amenée comporte, comme détaillé plus loin, un système de contrôle de présence de bouchons 2, en forme de capteur **19.**

Le dispositif 15 de sélection et d'entraînement positif est logé dans un canal **20** de transit en arc de cercle qui s'étend entre la goulotte 17 d'amenée et la goulotte 18 de sortie. Une roue **21** munie d'encoches **22** sur sa périphérie s'inscrit pour partie dans ce canal 20 de transit.

La goulotte 17 est une goulotte d'amenée des bouchons 2 vers le canal 20 de transit. Les encoches 22 de la roue 21 sont aptes à capter individuellement chacun des bouchons 2 transportés par la goulotte d'amenée 17. Le déplacement des bouchons 2 dans le canal 20 de transit est associé à la rotation de la roue 21 et à la présence des encoches 22 qui captent chaque bouchon 2. Ainsi chaque bouchon 2 qui est pris en charge par une encoche 22 est propulsé tout le long du canal 20 de transit et jusqu'à l'extrémité supérieure de la goulotte 18 de sortie.

Lorsqu'un bouchon 2 est entraîné par la roue 21 à encoches, il pousse en bloc l'ensemble des bouchons contenus dans la goulotte 18 de sortie. L'entraînement positif des bouchons par la roue 21 à encoches et la résistance mécanique de chacun des bouchons 2 sensiblement rigides permet de faire monter des bouchons 2 dans la goulotte 18 de sortie au moins jusqu'à l'entrée 11 de la goulotte 12 d'alimentation du poste 4 de bouchage. Le dispositif 15 de convoyage permet de remonter les bouchons 2 vers la goulotte 12 sur une hauteur H de manière silencieuse et fiable ; cette roue 21 à encoches se comporte comme une pompe pour un flux d'objets sensiblement rigides.

La goulotte 18 de sortie est, de préférence, constituée de tronçons, non représentés, qui permettent d'ajuster, selon les besoins, cette hauteur H de livraison des bouchons 2 au poste 4 de bouchage.

La goulotte 17 d'amenée qui guide les bouchons 2, peut présenter une portion verticale s'étendant au-dessus du canal 20. La portion verticale de la goulotte 17 d'amenée est apte à guider les bouchons 2 sur une file unique. Ainsi les bouchons 2 délivrés par la machine d'apprêt à une hauteur h, s'entassent les uns sur les autres pour constituer un stock tampon en amont de la roue 21 à encoches, sur une hauteur qui est de l'ordre de 1m environ et qui est contrôlée par le capteur 19. Le stock tampon est constitué de bouchons 2 au contact les uns des autres sous l'effet de leur propre poids.

Dans le cas de la machine d'apprêt de la figure 1, le dispositif 15 a une simple fonction de sélection et de tri des bouchons 2 ; cependant on retrouve la goulotte 17 d'amenée des bouchons 2 à la roue 21 à encoches et la goulotte 18 de sortie. Toutefois ces goulottes 17 et 18 n'ont que des fonctions simples d'amenée et de sortie sans rapport avec les fonctions qu'elles exercent dans le cas de la figure 2 où le dispositif 15 fait, en plus, fonction d'élévateur de bouchons.

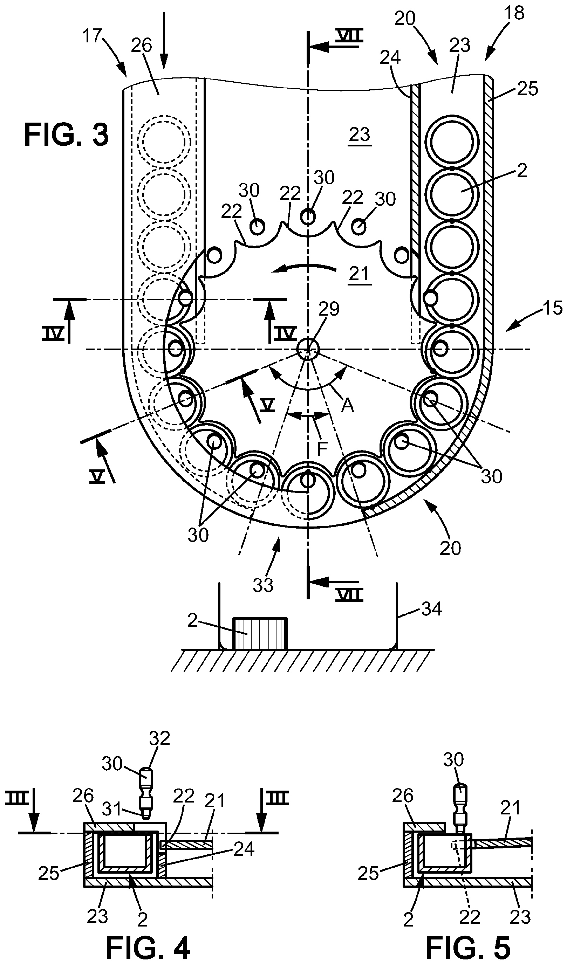

Les figures 3 à 5 montrent la partie du dispositif 15 qui est commune aux deux types de machines d'apprêt, c'est-à-dire la partie qui fait circuler les bouchons 2 dans le canal 20 et qui réalise la fonction de sélection et de triage.

La goulotte 17 d'amenée, la goulotte 18 de sortie, le canal 20 de transit et la roue 21 à encoches sont symétriques par rapport au plan vertical VII-VII de la figure 3. La partie de gauche de la figure 3 est une vue partielle de face ; la partie de droite est une coupe selon le plan III-III de la figure 4.

Une paroi **23** de fond s'étend sur toute la largeur du dispositif 15 depuis la goulotte 17 d'amenée jusqu'à la goulotte 18 de sortie, faisant office de bâti pour l'ensemble du dispositif 15.

La goulotte 17 d'amenée et la goulotte 18 de sortie présentent chacune des surfaces de guidage : une paroi **24** latérale intérieure et une paroi **25** latérale extérieure, ainsi qu'une paroi **26** frontale qui s'étend en avant de la goulotte 17 d'amenée et de la goulotte 18 de sortie, parallèlement à la paroi 23 de fond. La goulotte 17 d'amenée et la goulotte 18 de sortie présentent une section droite rectangulaire constituée par les différentes parois ci-dessus : la paroi 23 de fond et la paroi 26 frontale qui sont parallèles entre elles, ainsi que les parois 24 et 25 latérales qui sont également parallèles entre elles. La section droite des goulottes 17 et 18 correspond à l'encombrement d'un bouchon 2 normalement constitué.

La roue 21 à encoches est entraînée en rotation autour d'un axe **29** d'entraînement. Une pluralité de doigts **30** de maintien est également entraînée en rotation avec la roue 21 à encoches. A chaque encoche 22 correspond un doigt 30 de maintien situé en avant et en regard de ladite encoche 22. Au cours de sa rotation, le doigt 30 de maintien, correspondant à une encoche 22, se rapproche ou s'éloigne de la paroi 23 de fond du dispositif 15 de convoyage.

Le canal 20 de transit est délimité par la paroi 23 de fond et par la paroi 26 frontale qui fait office de glissière pour les bouchons 2 et cette glissière ne couvre que la partie externe périphérique dudit canal 20 pour permettre le passage des doigts 30. Cette paroi 26 frontale ferme le canal 20 au niveau des goulottes 17 et 18 sans occulter la totalité du canal 20 de guidage. Cela permet donc à chaque doigt 30 de pouvoir coopérer avec un bouchon 2 positionné dans l'encoche 22 qui correspond audit doigt 30.

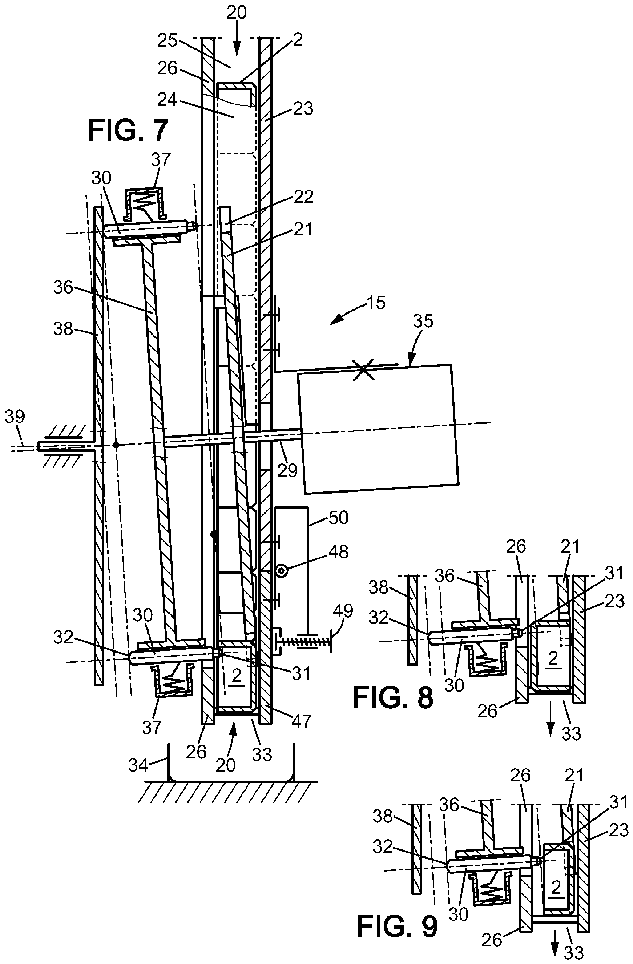

Le mécanisme permettant l'entraînement des bouchons 2 et le déplacement axial des doigts 30 de maintien sera détaillé aux figures 7 à 11.

Comme illustré figures 4 et 5, le doigt 30 de maintien occupe une position variable par rapport aux bouchons 2 de façon à placer chacune de ses extrémités **31** et **32** dans des positions qui lui permettent d'être actif ou inactif selon le cas, comme détaillé plus loin ; en effet, l'extrémité 31 est en relation directe avec les bouchons alors que l'extrémité 32 opposée assure la manœuvre dudit doigt 30, et en particulier sa remise en position active de maintien après le passage d'un bouchon 2 mal orienté.

Figure 4, le doigt 30 est représenté dans une position de retrait par rapport au rebord supérieur du bouchon 2 lorsque ledit bouchon 2 n'est pas encore capté par l'encoche 22 correspondante. En revanche, lorsque l'encoche 22 enserre le bouchon 2 correspondant, figure 5, ce dernier est entraîné en translation le long du canal 20 de transit. Le doigt 30 de maintien correspondant affleure avec le rebord du bouchon 2.

Le dispositif 15 de convoyage est aménagé pour offrir un secteur angulaire A au cours duquel l'extrémité 31 du doigt 30 de maintien pénètre dans le creux du bouchon 2 correspondant qui est correctement orienté. Dans ce secteur angulaire A, le doigt 30 contrôle, de ce fait, la bonne orientation et/ou la bonne conformité dudit bouchon 2 correspondant, avec son extrémité 31.

La paroi 25 latérale extérieure du canal 20 est interrompue sur un secteur angulaire F qui est plus petit que le secteur angulaire A. Autrement dit, le canal 20 de transit présente une fenêtre **33** d'éjection située en partie basse du dispositif 15 de convoyage. De préférence, l'angle du secteur F angulaire d'éjection est compris entre 40° et 80°. Le secteur angulaire A de guidage contrôlé est plus grand que le secteur angulaire F d'éjection ; il s'étend de part et d'autre du secteur angulaire F d'éjection sur un angle latéral supplémentaire suffisant pour laisser aux doigts 30 le temps de pénétrer le creux du bouchon 2 correspondant ; ce secteur A est, par exemple, compris entre 90° et 180°.

Autrement dit, lorsqu'un bouchon 2, transitant le long du canal 20 arrive en regard de la fenêtre 33 d'éjection, celui-ci n'est plus maintenu par la paroi 25 latérale extérieure mais uniquement par l'extrémité 31 du doigt 30 de maintien correspondant. Si le bouchon 2 présente un défaut d'orientation, il est alors possible d'escamoter le doigt 30 de maintien pour faire tomber le bouchon 2 défectueux sous l'effet de son propre poids à travers la fenêtre 33 d'éjection, dans un bac **34** de récupération posé à même le sol, par exemple.

Le doigt 30 sert à détecter un défaut et sert également de remède lorsqu'un défaut est détecté. C'est à la fois un palpeur de détection de défaut et un moyen de maintien escamotable.

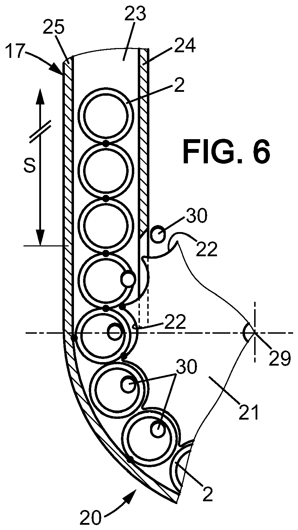

On va, à l'aide de la figure 6, décrire l'entrée du canal 20 et la synchronisation entre la rotation de la roue 21 à encoches 22 et l'arrivée des bouchons 2. Pour éviter qu'un bouchon 2 ne se retrouve coincé à l'entrée, l'invention propose un moyen simple de synchronisation consistant à garantir que les bouchons 2 situés dans la zone d'entrée du canal 20 sont de manière systématique inclus dans une file de bouchons 2 en contact successivement l'un avec l'autre. La file continue de bouchons, s'étendant depuis un bouchon 2 déjà capté par une encoche 22 jusqu'à un ou plusieurs bouchons 2 situés dans une portion terminale de la goulotte 17 d'amenée, constitue un stock tampon S.

Le bouchon 2 voit sa position le long du canal 20 de transit entièrement déterminée par l'encoche 22 qui l'accueille. Autrement dit, au moment de son arrivée dans le canal 20, chaque bouchon 2 se situe, sans risque de coincement, entre un contact avec la dent de l'encoche 22, un contact avec la paroi 25 latérale extérieure et un contact avec le bouchon 2 suivant.

Dans l'exemple illustré figure 6, la portion terminale de la goulotte 17 d'amenée s'étend verticalement au-dessus du bouchon 2 déjà capté par l'encoche 22, de sorte que l'ensemble du poids des bouchons 2 du stock tampon est retenu également par ladite encoche 22. Les bouchons 2 de la goulotte 17 d'amenée du canal 20 ont ainsi leur position qui est synchronisée avec la rotation de la roue 21 à encoches.

Un stock tampon S est maintenu dans la goulotte 17 d'amenée, sous le contrôle du capteur 19, sur une hauteur de l'ordre de 1 m environ.

De manière alternative, la portion terminale de la goulotte 17 d'amenée ainsi que la zone d'entrée du canal 20 pourraient être simplement inclinées par rapport à l'horizontale.

Pour mieux maîtriser la position des bouchons 2 dans la zone d'entrée du canal 20, la paroi 24 latérale intérieure présente une prolongation s'étendant en arrière de la roue 21 à encoches jusqu'à ce que le bouchon 2 ainsi guidé latéralement soit entièrement capté par une encoche 22.

Les figures 7 à 11 montrent, de façon plus détaillée, le système de sélection et de tri des bouchons 2.

L'axe 29 d'entraînement de la roue 21 à encoches est situé dans le plan de symétrie du dispositif 15 et il est incliné par rapport à la normale à la paroi 23 de fond d'un angle compris entre 1° et 10° et de préférence entre 2° et 5°. L'angle d'inclinaison de l'axe 29 d'entraînement est orienté à la fois vers l'avant et vers le bas du dispositif 15.

Le dispositif 15 de sélection et de convoyage comprend un mécanisme d'entraînement des doigts 30 de maintien. Ce mécanisme d'entraînement est constitué :
- d'un moteur **35** d'entraînement qui est solidaire de la paroi 23 de fond, et,
- d'un flasque **36** qui est fixé à distance de ladite roue 21 à encoches, sur l'axe 29 d'entraînement.

Le moteur 35 est commandé par l'intermédiaire d'un automate ou autre, en tenant compte des informations données par le système de contrôle, et en particulier le capteur 19 qui surveille le niveau des bouchons 2 dans la goulotte 17 d'amenée.

Les différents doigts 30 de maintien sont portés par le flasque 36, guidés en translation selon une direction qui est parallèle à l'axe 29 d'entraînement et ces doigts 30 sont répartis tout autour de la roue 21 à encoches en regard de chacune desdites encoches 22.

Pour chaque doigt 30 de maintien, le flasque 36 est équipé d'un mécanisme à ressort 37 poussant le doigt 30 de maintien soit dans une position stable active de maintien pour laquelle l'extrémité 31 dudit doigt 30 est positionnée vers l'arrière du dispositif 15, comme illustrée figure 7, soit vers une position stable inactive, illustrée figure 8, où l'extrémité 32 dudit doigt 30 est positionnée vers la partie frontale du dispositif 15.

Chacun des doigts 30 comporte une extrémité 31 active de maintien, située vers la paroi 23 de fond, apte à pénétrer dans le creux d'un bouchon 2 correctement orienté lorsque ledit doigt 30 de maintien se situe dans le secteur angulaire A de maintien, illustré à la figure 3. L'ensemble des extrémités 31 actives de chacun des doigts 30 de maintien définit un cercle de référence qui est coaxial à l'axe 29 d'entraînement. Ce cercle de référence coupe la surface de glissement de la paroi 26 frontale du canal 20 selon une ligne qui se situe au-dessus du niveau de la fenêtre 33 d'éjection et cette ligne définit le secteur angulaire A de maintien des bouchons 2 grâce à l'action des doigts 30.

Comme illustré figure 8, le bouchon 2 qui est mal orienté repousse le doigt 30 vers l'avant du dispositif 15 (c'est-à-dire vers la gauche sur la figure 8). Un mécanisme du type bistable, à ressort **37,** qui est interposé entre le flasque 36 et le doigt 30, entraîne alors automatiquement ledit doigt 30 de maintien correspondant vers une deuxième position stable, mais inactive. Dans la position stable inactive, l'extrémité 31 active du doigt 30 de maintien ne se plaque plus sur le fond du bouchon 2 défectueux de sorte que ce bouchon 2 défectueux tombe sous l'effet de son propre poids à travers la fenêtre 33 d'éjection.

L'absence d'accès à la zone creuse du bouchon 2 peut également résulter d'un autre type de défaut tel qu'un voile de plastique occultant partiellement ou totalement ladite zone creuse du bouchon 2. Le bouchon 2 défectueux peut également, comme représenté figure 9, être un bouchon sans sa bague d'inviolabilité ou encore être un bouchon plein résultant d'un moulage sans noyau. Autrement dit, le moyen de tri permet de tester l'existence d'une zone creuse correctement orientée pour chaque bouchon 2.

En fait, ce moyen de tri offre une sécurité totale pour l'alimentation du poste de bouchage d'une soutireuse.

Les doigts 30 de maintien présentent chacun une deuxième extrémité 32, opposée à l'extrémité 31, laquelle extrémité 32 est située du côté avant, ou frontal, du dispositif 15 de convoyage. Lorsque le doigt 30 de maintien est dans la position stable active, comme illustrée figure 7, l'extrémité 32 évolue le long d'un deuxième cercle de référence. Lorsque le doigt 30 est dans la position stable inactive, illustrée figure 8, c'est-à-dire quand il est avancé vers l'avant du dispositif 15, le cercle de ces extrémités 32 se déplace vers l'avant du dispositif 15, c'est-à-dire qu'il s'éloigne du flasque 36.

Le moyen de tri comprend également une came **38** de réarmement apte à ramener les doigts 30 de maintien situés hors du secteur angulaire de la fenêtre 33 d'éjection, depuis la deuxième position stable inactive illustrée figure 8 jusqu'à la position stable active illustrée figure 7.

La came 38 de réarmement se présente sous la forme d'un disque qui est parallèle au plan de la paroi 23 de fond du canal 20 de transit. La came 38 de réarmement est mobile en rotation autour d'un axe **39** qui est solidaire de la paroi 23 de fond, perpendiculaire à cette paroi 23, et cet axe 39 passe par le centre du cercle de référence des extrémités 32 des doigts 30. Ce cercle de référence des extrémités 32, lorsque les doigts 30 sont en position active de maintien des bouchons 2 est sensiblement écarté, à la limite, tangent à la came 38 de réarmement. Mais lorsqu'un doigt 30 de maintien a basculé dans la deuxième position stable, inactive, en raison d'un bouchon 2 défectueux, le cercle de référence de l'extrémité 32 de ce doigt 30 escamoté coupe le plan de la came 38 à un niveau qui se situe au-dessus des extrémités de la fenêtre 33 d'éjection, et, de ce fait, ledit doigt escamoté est progressivement ramené en position active. La pression de l'éventuel doigt 30 escamoté suffit à entraîner la came 38 de réarmement en rotation. Une telle came 38 de réarmement présente l'avantage de ne pas générer de frottement pour ramener le doigt 30 de maintien dans sa première position stable active.

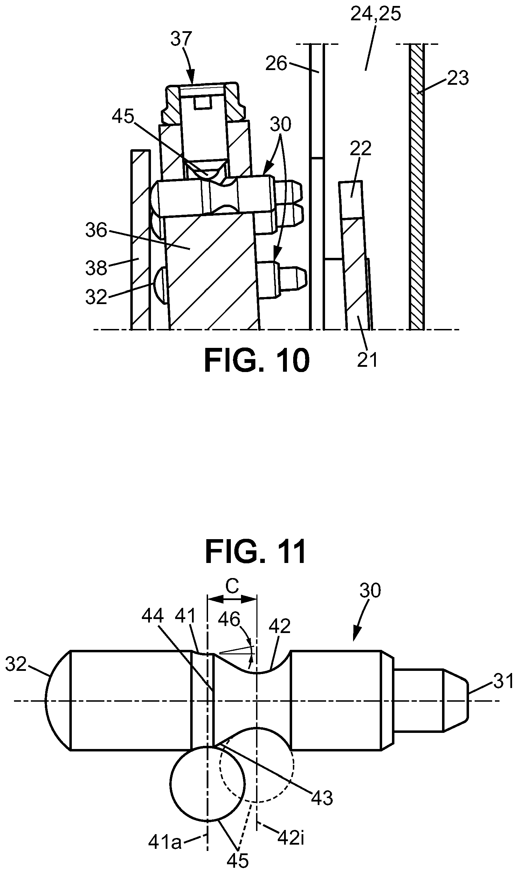

Comme illustré figure 11, chacun des doigts 30 de maintien a une forme de révolution. Le doigt 30 présente une première portée **41** de bille et une deuxième portée **42** de bille, chacune de forme torique coaxiale à l'axe dudit doigt 30. Le diamètre intérieur de la deuxième portée 42 torique est inférieur au diamètre intérieur de la première portée 41 torique.

Une surface **43** de raccordement conique est tangente à la deuxième portée torique 42 et présente une arête **44** de raccordement avec la première portée 41 torique. L'arête 44 de raccordement présente un diamètre légèrement supérieur au diamètre du fond de la première portée 41 torique. Le mécanisme à ressort 37 pousse une bille **45** au fond de la première portée 41 torique. Cette position correspond à la position stable active du doigt 30 ; cette position est stable en raison du léger bourrelet que présente l'arête de raccordement 44. Dans cette position stable, la bille 45 est positionnée dans un plan 41a qui est perpendiculaire à l'axe du doigt 30. De même, en position stable inactive, la bille 45 est positionnée dans un plan 42i et la distance entre les deux plans 41a et 42i correspond à la course C du doigt 30 entre ses deux positions stables.

L'arête 44 de raccordement circulaire est située dans un plan entre les plans 41a et 42i, à une distance du plan 41a de la première portée 41 de bille comprise entre 0,25 et 1,2 mm et de préférence comprise entre 0,5 et 1 mm. La course C est de l'ordre de 4 mm.

Lorsqu'un bouchon 2 défectueux pousse l'extrémité 31 du doigt 30 sur une distance axiale supérieure à la distance précitée entre l'arête 44 de raccordement et le plan 41a, la bille 45 roule le long de la surface 43 conique et tire ledit doigt 30 de maintien vers la gauche de la figure 11 jusqu'à ce que ladite bille 45 tombe au fond de la deuxième portée 42 torique.

Pour le réarmement, la came 38 pousse l'extrémité 32 du doigt 30 de maintien sur une distance axiale supérieure à la distance entre le fond de la deuxième portée 42 et l'arête 44 de raccordement. La bille 45 comprime alors le mécanisme à ressort 37 et, lorsque le bourrelet que représente l'arête 44 de raccordement est dépassé, la bille 45 retombe au fond de la première portée 41 torique et retrouve la première position stable du doigt 30 de maintien.

Le bourrelet que constitue l'arête 44 de raccordement présente, du côté de la première portée 41 torique, une pente **46** faisant un angle de quelques degrés seulement. Par exemple, la pente 46 présente un angle compris entre 1° et 10° et de préférence compris entre 4 et 6°. Ainsi, le doigt 30 de maintien et le mécanisme à ressort 37 constituent un palpeur bistable dissymétrique avec un effort de déclenchement très réduit. Un simple voile occultant partiellement le creux d'un bouchon 2 suffit à repousser l'extrémité 31 du doigt 30 avec un effort faible mais suffisant pour que la bille 45 remonte la pente 46 et que ledit doigt 30 bascule dans la position stable inactive où la bille 45 est au fond de la deuxième portée 42 de bille. Un tel mécanisme de came est apte à être sensible à des efforts réduits et donc sensible à un défaut faible sur les bouchons 2 et ceci malgré des cadences très élevées du dispositif 15 de sélection et de convoyage.

La figure 7 montre également, sous une forme schématique, un aménagement de la partie inférieure de la paroi 23 de fond pour permettre la vidange du canal 20 et, en particulier, permettre le retrait des bouchons qui sont maintenus par les doigts 30 et, éventuellement, ceux qui sont dans les goulottes d'entrée et de sortie.

La paroi 23 de fond comporte un panneau **47** qui est mobile ; ce panneau 47 est, par exemple, monté basculant au moyen d'une charnière **48** et il est actionné par un organe de manœuvre approprié comme une simple vis **49** qui est interposée entre ledit panneau 47 et une patte **50** solidaire de ladite paroi 23 de fond.

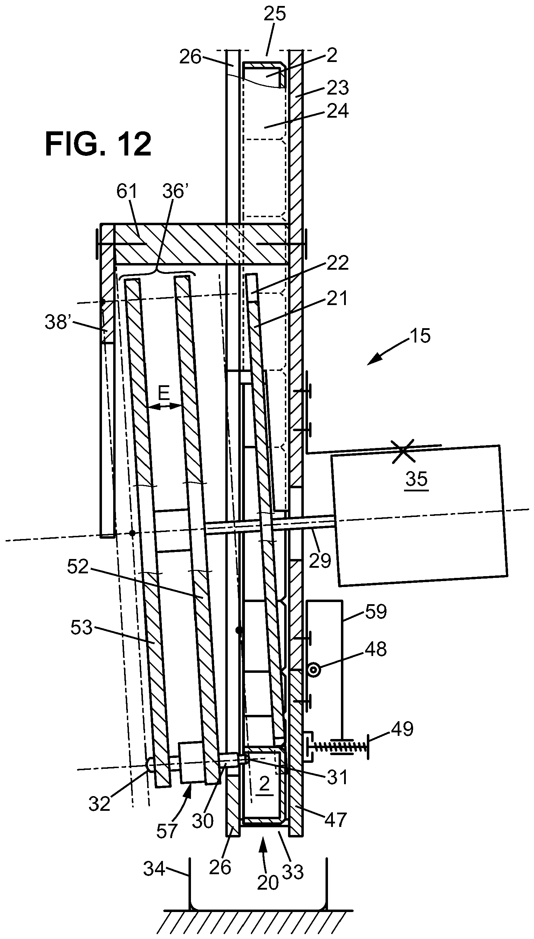

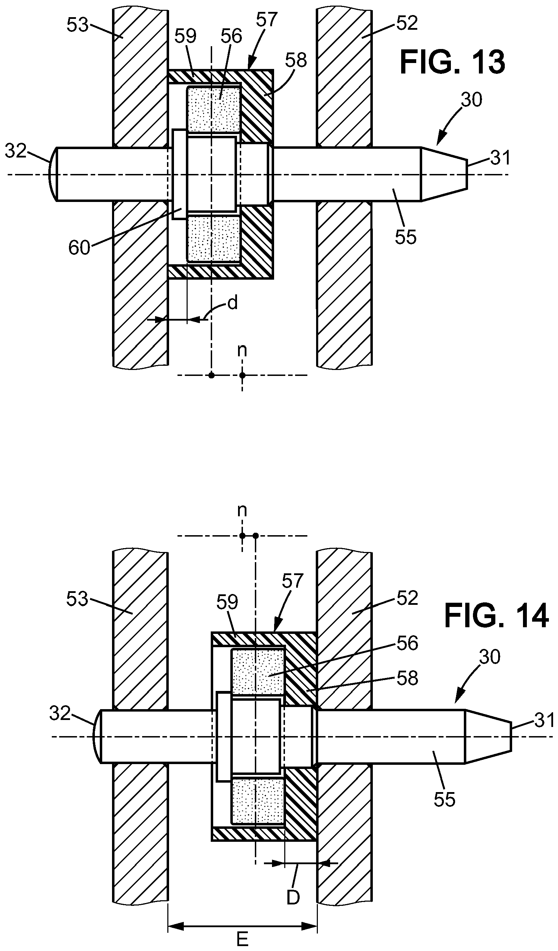

On va, à l'aide des figures 12 à 14, décrire un dispositif 15 de convoyage qui ne diffère du dispositif décrit précédemment que par la manière dont des doigts 30 de maintien sont entraînés, soit vers une première position stable active, soit vers une deuxième position stable mais inactive de maintien des bouchons 2.

Un flasque 36' de guidage des doigts 30 est constitué de deux disques **52, 53,** en matériau magnétique. Le moteur 35 entraîne en rotation, autour de l'axe 29, un ensemble monobloc comprenant successivement, le long dudit axe 29, la roue 21 à encoches, le disque 52 puis le disque 53. Les disques 52, 53 s'étendent radialement et sont distants axialement l'un de l'autre d'un entrefer E constant.

Les doigts 30 de maintien sont répartis autour de l'axe 29 de la même manière que les doigts 30 dans le dispositif 15 illustré en figure 3. Chaque doigt 30 de maintien comprend une broche **55** en matériau amagnétique, tel que de l'acier inoxydable, qui coulisse en translation dans deux alésages qui sont alignés l'un avec l'autre et situés, pour l'un, dans le disque 52 et, pour l'autre, dans le disque 53. Ainsi, la broche 55 est libre en translation selon une direction perpendiculaire aux disques 52, 53.

Chacun des doigts 30 de maintien comprend également un aimant **56** permanent en forme de bague entourant la broche 55 et un espaceur **57** en matériau synthétique. L'espaceur 57 comprend une paroi **58** radiale emmanchée sur l'arbre 55 et une jupe **59** entourant l'aimant 56 permanent. L'aimant 56 permanent est fixé à la broche 55 en étant pris en sandwich entre une butée **60** de ladite broche et la paroi 58 radiale de l'espaceur, laquelle paroi 58 est montée serrée, à force, sur la broche 55. L'aimant 56 et l'espaceur 57 sont disposés entre les deux disques 52, 53.

Le doigt 30 constitué de la broche 55, de l'aimant 56 et de l'espaceur 57 forme un ensemble monobloc qui est du type flottant en translation entre les deux disques 52, 53. La première position stable active du doigt 30 est telle que l'extrémité 31 dudit doigt 30 est située, comme précédemment, sur un cercle de référence et l'extrémité 32 dudit doigt 30 est située sur l'autre cercle de référence.

De plus, l'aimant 56 permanent est plus proche du disque 52 que du disque 53 et il est situé à une distance D minimale du disque 52 égale à l'épaisseur de la paroi 58 radiale.

Lorsqu'un bouchon 2 défectueux repousse l'extrémité 31 du doigt 30 de manière à dépasser une position neutre « n » dudit doigt 30, dans laquelle l'aimant 56 permanent est à égale distance des disques 52 et 53, le doigt 30 de maintien est alors attiré dans sa deuxième position stable inactive.

Dans sa deuxième position stable inactive, l'aimant 56 est plus proche du disque 53 que du disque 52. L'extrémité 32 du doigt 30 de maintien est située sur le cercle extrême. De plus, l'aimant 56 est situé à une distance d minimale du disque 53 qui correspond au dépassement axial de la jupe 59 au-delà de l'aimant 56. De manière alternative, la distance d minimale pourrait également être déterminée par une butée disposée sur la broche 55.

De manière avantageuse, la distance d minimale correspondant à la deuxième position stable inactive est inférieure à la distance D minimale correspondant à la première position stable. Cela permet de garantir un effort de désenclenchement du doigt 30 aussi faible que souhaité pour détecter un défaut d'orientation du bouchon 2. Toutefois, l'effort de maintien du doigt 30 dans la deuxième position stable inactive est suffisamment élevé pour éviter que des vibrations dues aux cadences élevées du dispositif ne viennent inopinément réenclencher ledit doigt 30 et le remettre en position active de maintien.

Le dispositif 15 comprend également une came 38' de réarmement qui peut se présenter sous la forme d'un disque comme précédemment figure 7 ou, comme représenté figure 12, sous la forme d'une demi-couronne s'étendant parallèlement au canal 20 de transit. Cette came 38', en forme de demi-couronne est fixée par un pied **61** à la paroi 23 de fond du dispositif 15.

De manière alternative, tout moyen de fixation de la came 38' de réarmement convient dès lors que ladite came présente une surface contre laquelle les extrémités 32 des doigts 30 peuvent s'appuyer lorsque lesdits doigts 30 sont en position stable inactive. La surface d'appui de la came 38' de réarmement s'étend parallèlement à la paroi 23 de fond du canal 20 de transit.

Ainsi, les extrémités 32 des doigts 30 qui auraient été déclenchées sont ramenées depuis la position inactive sur le cercle extrême vers une position sur le cercle arrière de référence. Le cercle extrême des extrémités 32 des doigts 30, lorsque ces derniers sont en position inactive de maintien, coupe le plan de la came 38' à un niveau qui se situe au-dessus des extrémités de la fenêtre 33 d'éjection, et, de préférence sensiblement, comme pour la came 38, au niveau de l'axe 29 de la roue 21 à encoches.

Il suffit que la came 38' pousse l'extrémité 32 du doigt 30 qui est en position inactive de maintien pour que le plan médian de l'aimant 56 permanent passe de la deuxième position stable inactive vers au moins la position neutre « n » ; l'attraction de l'aimant 56 permanent par le disque 52 prévaut alors et attire l'ensemble du doigt 30 de maintien dans la première position stable active de maintien des bouchons 2.

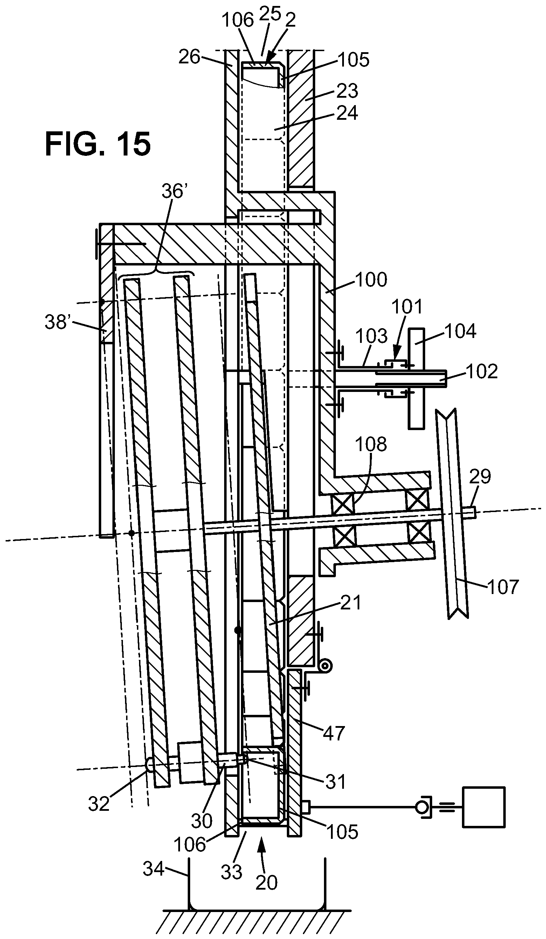

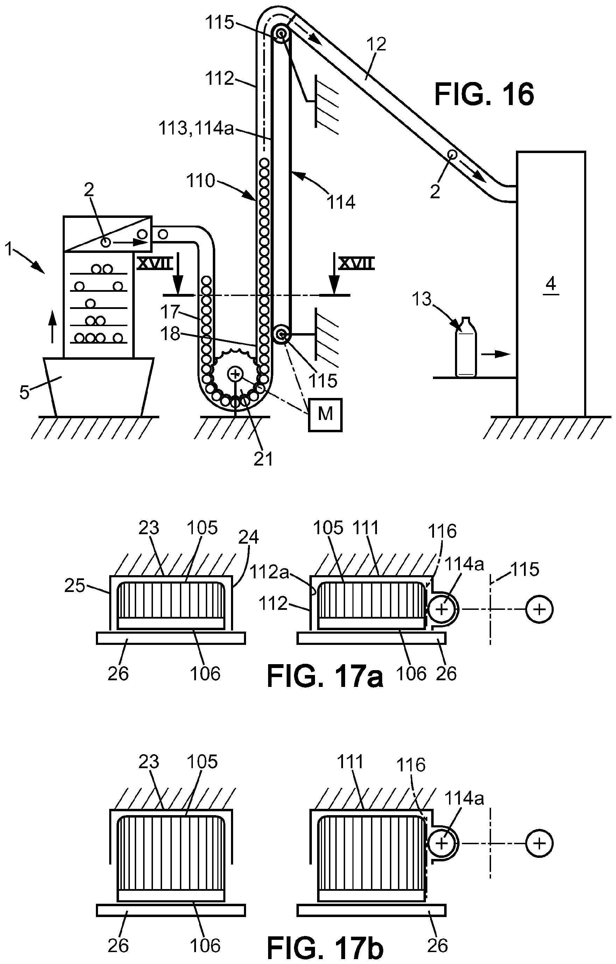

On va à l'aide des figures 15, 17a, 17b décrire un mode de réalisation d'un dispositif de propulsion et de tri de bouchons apte à s'adapter à des bouchons de formats différents qui diffèrent par la hauteur des bouchons. Ce mode de réalisation diffère du dispositif illustré aux figures 12-14 essentiellement par le fait que la paroi 26 frontale est rattachée rigidement à un socle **100** mobile par rapport à la paroi 23 de fond grâce à un mécanisme 101 d'adaptation. Le mécanisme **101** d'adaptation peut comprendre une série de translateurs manuels dont un seul est représenté. Chaque translateur manuel peut comprendre un goujon **102** fixé sur la paroi 23 de fond, un alésage **103** entourant le goujon 102 et rattaché au socle 100 ainsi qu'une poignée **104** rotative vissée sur le goujon 102 et entraînant en translation l'alésage 103. En actionnant simultanément chaque translateur, le socle 100 est déplacé parallèlement à la paroi 23 de fond. Tout autre mécanisme d'entraînement du socle 100 en translation selon une direction perpendiculaire à la paroi 23 de fond, peut convenir.

Comme illustré aux figures 17a et 17b, la paroi 23 de fond et la paroi 26 frontale couvrent toute la goulotte du dispositif, c'est-à-dire la portion 17 d'amenée, le canal 20 de transit et la portion 18 de sortie. Ainsi, le dispositif peut recevoir des bouchons de formats différents qui peuvent différer l'un de l'autre par la hauteur du bouchon entre un fond **105** du bouchon 2 et un bord libre **106** du bouchon 2.

L'arbre 29 d'entraînement en rotation de la roue 21 et des flasques 36' porte-doigts est monté sur un palier rotatif **108** fixé au socle 100. Ainsi, l'arbre 29 d'entraînement de la roue 21 et des flasques 36' porte-doigts peuvent être déplacés en translation en même temps que le socle 100 par rapport à la paroi 23 de fond.

Avantageusement, la came 38" de réarmement peut aussi être fixée au socle 100. La position stable active et la position stable inactive des extrémités 31 des doigts 30 sont translatées d'une même distance par rapport à la paroi 23 de fond. Ainsi, lors du mouvement d'adaptation, lesdites positions stables actives et inactives restent à une même position relative par rapport à la paroi 26 frontale. Lorsque la distance des deux positions stables actives et inactives des doigts 30 a été correctement réglée pour ne retenir que des bouchons 2 bien orientés et non défectueux pour un format donné de bouchons (figure 17a), il suffit de translater en bloc le socle 100, et tout ce qui est fixé au socle 100, pour que le dispositif soit dès lors adapté à sélectionner et trier des bouchons d'un autre format, plus haut par exemple (figure 17b).

Dans une variante de dispositif convenant à des formats de bouchons ayant une faible différence de hauteur, la roue 21 à encoches peut ne pas être translatée lors de l'adaptation.

On comprend qu'un mécanisme d'adaptation similaire peut aussi équiper le dispositif illustré aux figures 3 à 13. Dans ce cas, le flasque 36 est monté sur un palier fixe au socle 100. De préférence, le palier 39 tenant le disque 38 de réarmement peut aussi être fixé au socle 100.

La figure 15 illustre également une variante de mécanisme d'entraînement de la roue 21 à encoches 21 et des flasques 36' porte-doigts. Cette variante peut convenir à l'ensemble des modes de réalisation précédemment décrits. Cette variante comprend une poulie **107** entraînée par une courroie flexible non représentée sur la figure 15. Cela permet qu'un moteur **M** illustré en figure 16 soit fixé par rapport à un châssis du dispositif et entraîne la poulie 107.

On va à l'aide des figures 16, 17a, 17b, 18a, 18b décrire un mode de réalisation permettant de convoyer vers le haut des bouchons 2 pouvant présenter des stries sur leur pourtour extérieur. Les installations 4 de bouchage de récipient 13 nécessitent de convoyer des bouchons 2 vers le haut car la machine 1 d'apprêt et de tri primaire des bouchons 2 ne peut généralement pas être immédiatement adjacente au poste 4 de bouchage. En effet, la machine 1 d'apprêt impose que des chariots de livraison puissent accéder à la trémie 5. Le poste 4 de bouchage est généralement situé au-dessus d'une remplisseuse des récipients 13 qui elle-même est entourée par des convoyeurs d'amenée des récipients vides et d'évacuation des récipients remplis et bouchés. Ainsi, pour alimenter à distance le poste 4 de bouchage, les bouchons 2 doivent être élevés de plusieurs mètres de manière à pouvoir s'écouler par une rampe 12 inclinée jusqu'au poste 4 de bouchage.

Comme illustré aux figures 16, 17a, 17b, la portion 18 de sortie de la goulotte comprend une partie **110** d'élévation qui remonte au-dessus d'un moyen de propulsion de bouchons dans la goulotte. Le moyen de propulsion peut éventuellement être la roue 21 à encoches pré-décrite ou bien tout autre moyen. Dans l'exemple illustré, la partie 110 d'élévation est rectiligne et verticale. Les bouchons 2 propulsés par la roue 21 à encoches sont guidés d'une part par une paroi **111** de fond (figure 17a) et d'autre part par une paroi **112** latérale gauche et par une paroi latérale droite 113. La paroi 111 de fond reçoit le fond 105 du bouchon 2 et peut être fixée à la paroi 23 de fond du dispositif ou au châssis non illustré. La paroi **112** latérale gauche est fixe et s'étend dans le prolongement de la paroi 24 latérale intérieure du canal 20 de transit. La paroi **113** latérale droite correspond à la paroi 25 latérale extérieure dudit canal 20. La paroi **113** latérale droite est constituée par un brin **114a** d'une courroie **114.** La courroie 114 est enroulée et tendue autour de deux poulies **115.**

La courroie 114 est à section torique. Les bords libres 106 des bouchons 2 sont ainsi guidés latéralement d'un côté gauche par une surface **112a** de la paroi **112** latérale gauche qui est sensiblement plane et du côté droit par une surface de guidage **116** qui est tangente au brin 114a et parallèle à la paroi latérale gauche 112. Les poulies 115 sont entraînées en rotation de manière que le brin 114a soit mobile vers le haut par rapport à la paroi 111 de fond, c'est-à-dire par rapport au châssis du dispositif. La paroi 114a glisse le long de la surface de guidage 116. Ainsi, les bouchons 2 en train de remonter le long de la partie 110 d'élévation restent guidés latéralement entre la paroi 112 latérale gauche fixe et le brin 114a de la courroie 114.

La vitesse de la courroie 114 et de son brin qui constitue la paroi 114a est, par exemple, de l'ordre de 1.05 à 1.3 fois la vitesse des bouchons 2 dans le canal 20 de transit.

Dans une autre variante, la portion 110 d'élévation peut n'être pas verticale, tout en s'élevant au-dessus du moyen de propulsion des bouchons dans la goulotte. La portion 110 d'élévation peut par exemple être inclinée par rapport à la verticale.

Dans une variante, la portion 110 d'élévation peut n'être pas rectiligne. Dans ce cas, la paroi 112 latérale gauche et la surface 116 de guidage ne sont pas planes et sont des surfaces courbes en regard l'une de l'autre de manière à former un couloir de guidage dont la géométrie est fixe par rapport à la paroi 111 de fond. Le brin 114a peut alors glisser sur des patins de manière que la génératrice du brin 114a servant de guidage aux bouchons 2 puissent se déplacer vers le haut le long de cette surface courbe 116 de guidage.

Dans une variante, le côté équipé de la courroie 114 peut être celui qui est dans le prolongement de la paroi 24 latérale intérieure.

La courroie 114 peut présenter toutes sortes de sections autres que circulaires, par exemple la courroie 114 peut être à section trapézoïdale.

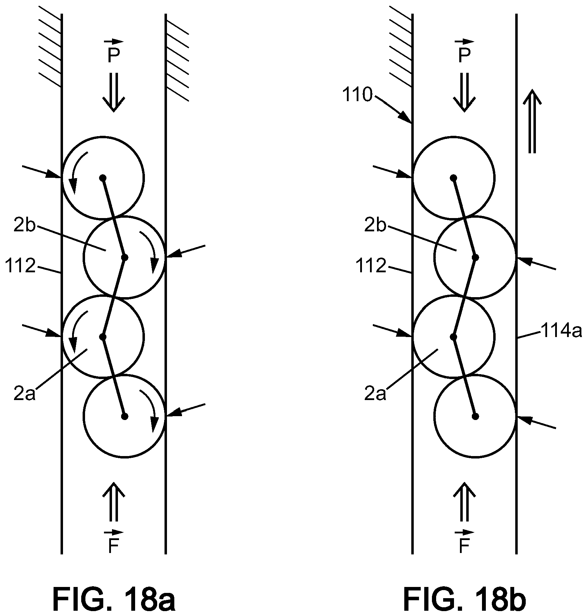

On va à l'aide de la figure 18a décrire le phénomène de blocage pouvant survenir dans des goulottes montantes à paroi fixe. Les surfaces latérales de guidage sont distantes l'une de l'autre d'une distance légèrement supérieure au diamètre des bouchons 2 à élever. Le nombre de bouchons 2 empilés les uns sur les autres peuvent par exemple être de plusieurs centaines. Chacun des bouchons 2 en train de remonter le long de la partie d'élévation est ainsi soumis à l'effort F de propulsion du moyen de propulsion des bouchons et au poids P des bouchons au-dessus de lui. Ces deux forces opposées tendent à faire que les bouchons 2 se plaquent de manière alternée sur chacune des deux parois latérales. Ce phénomène a lieu même si la partie d'élévation n'est pas strictement verticale. Lorsque le jeu entre les bouchons et les parois latérales est faible, l'essentiel des efforts auxquels sont soumis les bouchons sont ceux dans l'alignement de la goulotte d'élévation.

L'inventeur s'est rendu compte qu'à partir d'un certain seuil, les bouchons 2 en train de remonter se mettent tous à pivoter de manière également alternée. L'inventeur s'est rendu compte que de manière surprenante, cette mise en mouvement alternée globale s'accompagne d'un blocage complet de la remontée des bouchons quel que soit l'effort de propulsion auquel est soumise la file des bouchons. Tout ce passe comme si, les bouchons cessent d'avoir un comportement indépendant les uns des autres, et entrent dans un comportement collectif global de la file de bouchons. Il se produit soudainement comme un arc-boutement global de la file qui bloque l'écoulement.

Prenons l'exemple d'un bouchon 2a en appui sur une surface latérale gauche et un bouchon 2b, immédiatement adjacent et au-dessus du bouchon 2a. Le bouchon 2b est en appui sur la surface latérale droite. Lorsque la file de bouchons adopte un comportement collectif global, le bouchon 2a pivote sur lui-même dans le sens anti-horaire et entraîne le bouchon 2b dans le sens de rotation horaire. On voit que l'effort de frottement de roulement de chaque bouchon 2a, 2b contre sa paroi respective s'ajoute et s'augmente pour s'opposer à la remontée des bouchons. Lorsque la file de bouchons adopte un comportement collectif global, il se produit comme un arc-boutement global de la file qui bloque l'écoulement.

L'inventeur s'est rendu compte que de manière surprenante, plusieurs paramètres intervenaient dans l'apparition du blocage soudain de la file de bouchons. En particulier, le phénomène apparaît à partie d'une certaine hauteur de remontée, supérieure à 2 mètres par exemple. D'autres paramètres tels que le poids de chaque bouchon, la raideur de chaque bouchon, les coefficients de frottement des parois latérales et le jeu entre les bouchons 2 et les parois latérales de guidage peuvent également intervenir.

L'inventeur s'est rendu compte que de manière encore plus surprenante, l'aptitude des bouchons à s'engrener mutuellement, était un paramètre majeur dans l'apparition des blocages des bouchons. En particulier, l'inventeur a découvert que l'aptitude d'une goulotte unifilaire à guider la remontée d'une file de bouchons propulsée en partie basse de la goulotte était très limitée lorsque les bouchons présentaient un rebord strié.

L'inventeur a cherché une solution technique pour supprimer le phénomène de blocage dans le cas de hauteur de remontée élevée et/ou dans le cas de bouchons striés.

Comme illustré en figure 18b, la paroi 114a latérale droite glisse vers le haut tout en constituant le même couloir de guidage que si la partie droite avait été immobile. Dès lors que la paroi 114a mobile présente une vitesse de remontée supérieure à la vitesse de remontée des bouchons 2a, 2b à l'intérieur de la goulotte, l'effort de frottement auquel est soumis le bouchon 2b par la paroi 114a latérale droite est dirigé vers le haut et non plus dirigé vers le bas comme en figure 18a.

Le mouvement de remontée de la paroi 114a latérale empêche que les effets de frottement sur la paroi 114a se cumulent mutuellement. Cela désolidarise la rotation des bouchons les uns par rapport aux autres. Cela évite que les bouchons de la partie 110 d'élévation n'entrent globalement en rotation alternée. De manière fort surprenante, cela supprime le phénomène de blocage des bouchons , et ceci même pour des goulottes s'élevant sur plusieurs mètres au-dessus du propulseur de bouchons.

Par exemple, la portion 110 d'élévation peut s'étendre au-dessus du moyen 21 de propulsion des bouchons sur une hauteur comprise entre 2,7 m et 4 m. Selon une autre manière de caractériser cet aspect, la portion 110 d'élévation peut s'étendre au-dessus du moyen de propulsion des bouchons sur une hauteur supérieure à 100 fois la largeur de guidage de la goulotte correspondant au diamètre maximum des bouchons à remonter.

De manière surprenante, la partie 110 d'élévation équipée d'au moins une paroi latérale mobile vers le haut peut faire remonter des bouchons à bord strié s'engrenant mutuellement.

Par ailleurs, le fait d'utiliser des doigts de maintien pour conserver les bouchons bien orientés et non défectueux dans l'encoche de la roue 21 à encoches, permet d'accepter des bouchons de diamètres différents, par exemple variant de 25 %. La modification du diamètre des bouchons à traiter n'affecte sensiblement pas la fonction de tri supplémentaire. Cependant, pour une même vitesse d'entraînement de la roue 21 à encoches, la vitesse linéaire des bouchons dans la partie 110 d'élévation varie de 25 % également. En choisissant une vitesse de courroie 114 telle que le défilement du brin 114a soit de 1,05 fois la vitesse de remontée des bouchons de plus grand diamètre, le dispositif peut traiter des bouchons 25 % plus petits sans avoir à modifier la vitesse d'entraînement des poulies 115 par rapport à la vitesse d'entraînement de la roue 21 à encoches. Ces bouchons de diamètre 25 % plus petits voient une paroi 114a latérale défiler à une vitesse 25 % plus rapide.

Le dispositif de l'invention est donc particulièrement flexible, pouvant s'adapter à une grande variété de configuration. La fonction de tri à partir de doigts de maintien des bouchons à conserver permet de fournir un tri supplémentaire sur l'orientation des bouchons et de trier des défauts non encore détectés. Ce procédé de tri supplémentaire est assez sensible à la hauteur des bouchons à trier, cependant la combinaison avec des moyens d'adaptation à des dispositifs à des hauteurs de bouchons différentes permet de fournir ce tri supplémentaire sans réduire la flexibilité des bouchons à traiter.

Lorsque la portion de sortie de la goulotte est équipée d'une paroi latérale mobile, l'ensemble du dispositif peut s'adapter à des bouchons ayant des caractéristiques de frottement mutuel très variables ainsi qu'à des bouchons ayant un diamètre extérieur très variable sans être limité par la hauteur de remontée possible des bouchons.

## Revendications

1. Dispositif (15) de sélection et de tri pour des éléments de bouchage ou bouchons creux destinés à un poste (4) de bouchage, lequel dispositif se présente sous la forme d'une goulotte formée de deux portions : une portion (17) d'amenée et une portion (18) de sortie et, entre ces deux portions, un canal (20) de transit en arc de cercle qui comporte une fenêtre (33) d'éjection, lequel canal (20) enveloppe partiellement une roue (21) munie d'encoches (22) qui sont adaptées à la taille desdits bouchons (2), laquelle roue (21) est associée à des doigts (30), **caractérisé en ce que** :
- ladite portion (18) de sortie est destinée à être racordée au poste (4) de bouchage,
- lesdits doigts (30) ont pour fonction de maintenir lesdits bouchons (2) lors de leur passage devant ladite fenêtre (33) d'éjection dans leur encoche (22) respective, lorsqu'ils sont bien orientés et non défectueux,
- la portion (18) de sortie est destinée à conduire lesdits bouchons bien orientés et non défectueux,
- lesdits doigts (30) de maintien des bouchons (2) sont mobiles entre deux positions stables :
- une position stable active de maintien desdits bouchons (2) dans leur encoche (22), selon laquelle une extrémité (31) du doigt (30) correspondant pénètre dans le creux dudit bouchon (2), et - une position stable inactive selon laquelle lesdits bouchons (2) ne sont pas maintenus, la position stable inactive des doigts (30) étant située à distance transversale du canal (20) de transit de manière que le bouchon correspondant n'est absolument pas maintenu par le doigt (30).

2. Dispositif selon la revendication 1, dans lequel la fenêtre (33) d'éjection est située en partie basse dudit dispositif (15), de manière que les bouchons (2) qui arrivent en regard de la fenêtre (33) d'éjection et ne sont pas maintenus par un doigt (30), tombent sous l'effet de leur propre poids à travers la fenêtre (33) d'éjection.

3. Dispositif selon la revendication 1 ou 2, dans lequel ladite position stable inactive est atteinte automatiquement par réaction lorsque l'extrémité (31) du doigt (30) correspondant bute sur un bouchon (2) retourné, lequel bouchon (2) retourné empêche ladite extrémité (31) de pénétrer dans le creux dudit bouchon (2) et provoque un mouvement de retrait immédiat dudit doigt (30) empêché, jusqu'à ce qu'il atteigne ladite position stable inactive.

4. Dispositif selon l'une quelconque des revendications 1 à 3, **caractérisé en ce qu'**il comprend un mécanisme d'entraînement positif de la roue (21) à encoches et un flasque (36, 36') porte-doigts qui est disposé et fixé sur un arbre (29) d'entraînement de la roue (21) à encoches.

5. Dispositif selon les revendications 1 et 4 dans leur ensemble, dans lequel le canal (20) de transit est délimité par des surfaces de glissement comprenant une paroi (23) de fond et une paroi (26) frontale qui sont parallèles entre elles, et dans lequel l'axe de l'arbre (29) commun à la roue (21) à encoches et au flasque (36, 36') porteur des doigts (30) est incliné par rapport à la normale de la paroi (23) de fond, dans une direction telle que le plan d'un cercle des extrémités desdits doigts (30) coupe la surface de glissement de la paroi (26) frontale selon une ligne qui passe nettement au-dessus des extrémités de la fenêtre (33) d'éjection.

6. Dispositif selon la revendication 4 ou 5, dans lequel le flasque (36') porte-doigts comprend deux disques (52, 53) en matériau magnétique qui sont parallèles entre eux et qui sont munis de moyens de guidage des doigts (30) de maintien, lesquels doigts (30) de maintien sont constitués chacun d'une broche (55) en matériau amagnétique qui est montée libre en translation dans l'un au moins des disques (52, 53) selon une direction axiale, et chaque doigt (30) comporte un aimant (56) permanent qui est fixé sur ladite broche (55), lequel doigt (30), avec son aimant (56), flotte entre les deux disques (52, 53).

7. Dispositif selon la revendication 6, **caractérisé en ce que** le doigt (30) de maintien comprend un espaceur (57) en matériau amagnétique disposé axialement entre l'aimant (56) et chacun des deux disques (52, 53), lequel espaceur (57) permet de régler la distance de l'aimant (56) par rapport à chaque disque (52, 53), ladite distance étant plus grande entre ledit aimant (56) et le disque (52) côté bouchons que celle entre ledit aimant (56) et l'autre disque (53).

8. Dispositif selon l'une quelconque des revendications précédentes, comprenant une came (38, 38') de réarmement des doigts (30) de maintien, laquelle came (38, 38') de réarmement est apte à ramener des doigts (30) de maintien qui sont situés hors d'un secteur de la fenêtre (33) d'éjection depuis la position stable inactive jusqu'à la position stable active de maintien.

9. Dispositif selon la revendication 8, dans lequel les doigts (30) de maintien présentent chacun une extrémité (32) de réarmement qui est à l'opposé de l'extrémité (31) de maintien, lesquelles extrémités de réarmement se situent, quand les extrémités (31) de maintien sont inactives, dans un plan qui coupe le plan de la came (38, 38') de réarmement au-dessus du niveau des extrémités de la fenêtre (33) d'éjection, provoquant la remise en position de façon automatique desdits doigts (30) en question au fur et à mesure de leur rotation avec la roue (21) à encoches et de leur contact avec ladite came (38, 38') de réarmement.

10. Dispositif selon l'une des revendications 1 à 9, dans lequel la portion (18) de sortie comprend une goulotte (18) de sortie dont la hauteur (H) est adaptable par le biais de tronçons pour livrer les bouchons (2) à un niveau approprié, ledit dispositif comprenant une goulotte (17) d'amenée dont la hauteur est choisie de façon à accumuler une certaine quantité de bouchons (2) et de façon à pouvoir asservir le fonctionnement de ladite roue (21) à encoches, lequel asservissement comprend un système de détection par capteur (19), de la présence de bouchons (2), lequel système de détection est situé en amont de ladite roue (21) à encoches, sur ladite goulotte (17) d'amenée.

11. Dispositif selon l'une des revendications 1 à 10, dans lequel le canal (20) de transit est délimité par des surfaces de glissement comprenant une paroi (23) de fond et une paroi (26) frontale qui sont parallèles entre elles et dans lequel la paroi (23) de fond comporte un panneau (47) qui est escamotable pour permettre la vidange du canal (20) et, en particulier, retirer les bouchons (2) qui sont maintenus par les doigts (30) et, éventuellement, ceux qui sont dans la goulotte (18) de sortie et/ou la goulotte (17) d'amenée, lequel panneau (47) est monté mobile par rapport à la paroi (23) de fond et est actionné par un organe de manœuvre, comme une vis (49), laquelle vis (49) est interposée entre ledit panneau (47) et une patte (50) solidaire de ladite paroi (23) de fond.

12. Dispositif selon l'une des revendications 1 à 11, dans lequel le canal (20) de transit est délimité par des surfaces de glissement comprenant une paroi (23) de fond et une paroi (26) frontale qui sont parallèles entre elles, le dispositif comprenant un mécanisme d'adaptation (101) conçu pour déplacer la paroi (26) frontale par rapport à la paroi (23) de fond selon une direction d'adaptation sensiblement perpendiculaire à la paroi (23) de fond, de manière à faire varier une hauteur du canal (20) de transit entre une hauteur maximum et une hauteur minimum.

13. Dispositif selon les revendications 4, 8 et 12 prises dans leur ensemble, dans lequel le mécanisme d'adaptation (101) est conçu pour déplacer d'une même distance d'adaptation la paroi (26) frontale, le flasque (36, 36') porte-doigts, et la came (38, 38') de réarmement.

## Patentansprüche

1. Auswahl- und Sortiervorrichtung (15) für Verschließelemente oder Hohlstopfen, die für eine Verschließstation (4) bestimmt sind, wobei die Vorrichtung in Form einer Rinne vorliegt, die aus zwei Abschnitten gebildet ist, und zwar einem Zuführabschnitt (17) und einem Ausgabeabschnitt (18) und, zwischen diesen Abschnitten, einem kreisbogenförmigen Transitkanal (20), der ein Auswurffenster (33) aufweist, wobei der Kanal (20) teilweise ein Rad (21) umhüllt, das mit Ausnehmungen (22) versehen ist, die für die Größe der Stopfen (2) geeignet sind, wobei das Rad (21) Fingern (30) zugeordnet ist, **dadurch gekennzeichnet, dass**:
- der Ausgabeabschnitt (18) dazu bestimmt ist, mit der Verschließstation (4) verbunden zu sein;
- die Finger (30) die Funktion haben, die Stopfen bei ihrem (2) Durchgang vor dem Auswurffenster (33) in ihrer jeweiligen Ausnehmung (22) zu halten, wenn sie richtig ausgerichtet und nicht fehlerhaft sind,
- der Ausgabeabschnitt (18) dazu bestimmt ist, die richtig ausgerichteten und nicht fehlerhaften Stopfen zu führen,
- die Haltefinger (30) der Stopfen (2) zwischen zwei stabilen Stellungen beweglich sind:
- einer aktiven stabilen Haltestellung zum Halten der Stopfen (2) in ihrer Ausnehmung (22), gemäß der ein Ende (31) des entsprechenden Fingers (30) in den Hohlraum des Stopfens (2) eindringt, und
- einer inaktiven stabilen Stellung, gemäß der die Stopfen (2) nicht gehalten werden, wobei die inaktive stabile Stellung der Finger (30) in einem solchen Querabstand vom Transitkanal (20) gelegen ist, dass der entsprechende Stopfen von dem Finger (30) überhaupt nicht gehalten wird.

2. Vorrichtung nach Anspruch 1, bei der das Auswurffenster (33) im unteren Teil der Vorrichtung (15) so gelegen ist, dass die Stopfen (2), die gegenüber dem Auswurffenster (33) eintreffen und nicht von einem Finger (30) gehalten werden, unter der Einwirkung ihres Eigengewichts durch das Auswurffenster (33) hindurchfallen.

3. Vorrichtung nach Anspruch 1 oder 2, bei der die inaktive stabile Stellung durch Reaktion automatisch erreicht wird, wenn das Ende (31) des entsprechenden Fingers (30) gegen einen umgedrehten Stopfen (2) stößt, der umgedrehte Stopfen (2) das Ende (31) daran hindert, in den Stopfen (2) einzudringen, und eine sofortige Rückzugsbewegung des gehinderten Fingers (30) bewirkt, bis er die inaktive stabile Stellung erreicht.

4. Vorrichtung nach einem der Ansprüche 1 bis 3, **dadurch gekennzeichnet, dass** er einen formschlüssigen Antriebsmechanismus des Rades (21) mit Ausnehmungen umfasst und einen Fingertragflansch (36, 36'), der an einer Antriebswelle (29) des Rades (21) mit Ausnehmungen angeordnet und befestigt ist.

5. Vorrichtung nach den Ansprüchen 1 und 4 zusammen, bei welcher der Transitkanal (20) durch Gleitflächen begrenzt wird, die eine Bodenwand (23) und eine Stirnwand (26) umfassen, die parallel zu einander sind, und bei welcher die Achse der Welle (29), die dem Rad (21) mit Ausnehmungen und dem Finger (30) tragenden Flansch (36, 36') gemein ist, in Bezug auf die Senkrechte der Bodenwand (23) in eine solche Richtung geneigt ist, das die Ebene eines Kreises der Enden der Finger (30) die Gleitfläche der Stirnwand (26) gemäß einer Linie schneidet, die deutlich über den Enden des Auswurffensters (33) verläuft.

6. Vorrichtung nach den Ansprüchen 4 oder 5, bei welcher der Fingertragflansch (36') zwei Scheiben (52, 53) aus magnetischem Material umfasst, die parallel zueinander sind und mit Führungseinrichtungen für die Haltefinger (30) versehen sind, die Haltefinger (30) jeweils aus einem Stift (55) aus unmagnetischem Material bestehen, der in mindestens einer der Scheiben (52, 53) entlang einer axialen Richtung translatorisch frei beweglich gelagert ist, und jeder Finger (30) einen Permanentmagneten (56) beinhaltet, der an dem Stift (55) befestigt ist, wobei der Finger (30) mit seinem Magneten (56) zwischen den beiden Scheiben (52, 53) schwebt.

7. Vorrichtung nach Anspruch 6, **dadurch gekennzeichnet, dass** der Haltefinger (30) einen Abstandhalter (57) aus unmagnetischem Material umfasst, der axial zwischen dem Magneten (56) und jeder der beiden Scheiben (52, 53) angeordnet ist, wobei der Abstandhalter (57) es ermöglicht, den Abstand des Magneten (56) von jeder Scheibe (52, 53) zu verstellen, wobei der Abstand zwischen dem Magneten (56) und der stopfenseitigen Scheibe (52) größer ist als der zwischen dem Magneten (56) und der anderen Scheibe (53).

8. Vorrichtung nach einem der vorhergehenden Ansprüche, umfassend einen Rückstellnocken (38, 38') zum Zurückstellen der Haltefinger (30), wobei der Rückstellnocken (38, 38') geeignet ist, außerhalb eines Sektors des Auswurffensters (33) gelegene Haltefinger (30) aus der inaktiven stabilen Stellung bis in die aktive stabile Haltestellung zurückzuführen.

9. Vorrichtung nach Anspruch 8, bei der die Haltefinger (30) jeweils ein Rückstellende (32) aufweisen, das entgegengesetzt zum Halteende (31) ist, wobei die Rückstellenden, wenn die Halteenden (31) inaktiv sind, in einer Ebene gelegen sind, welche die Ebene des Rückstellnockens (38, 38') oberhalb der Enden des Auswurffensters (33) schneidet, was die automatische Rückstellung der betreffenden Finger (30) im Zuge ihrer Drehung mit dem Rad (21) mit Ausnehmungen und ihres Kontakts mit dem Rückstellnocken (38, 38') bewirkt.

10. Vorrichtung nach einem der Ansprüche 1 bis 9, bei welcher der Ausgabeabschnitt (18) eine Ausgaberinne (18) umfasst, deren Höhe (H) über Teilstücke anpassbar ist, um die Stopfen (2) in einer geeigneten Höhe auszugeben, wobei die Vorrichtung eine Zuführrinne (17) umfasst, deren Höhe so gewählt ist, dass eine gewisse Menge Stopfen (2) gesammelt wird und so, dass die Funktionsweise des Rades (21) mit Ausnehmungen gesteuert werden kann, wobei die Steuerung ein Sensordetektionssystem (19) zum Detektieren des Vorhandenseins von Stopfen (2) umfasst, wobei das Detektionssystem stromauf des Rades (21) mit Ausnehmungen an der Zuführrinne (17) gelegen ist.

11. Vorrichtung nach einem der Ansprüche 1 bis 10, bei welcher der Transitkanal (20) durch Gleitflächen begrenzt wird, die eine Bodenwand (23) und eine Stirnwand (26) umfassen, die parallel zueinander sind, und bei welcher die Bodenwand (23) eine Platte (47) beinhaltet, die hochklappbar ist, um das Entleeren des Kanals (20) zu ermöglichen und insbesondere die Stopfen (2) zu entnehmen, die von den Fingern (30) gehalten werden, und gegebenenfalls diejenigen, die in der Ausgaberinne (18) und/oder der Zuführrinne (17) sind, wobei die Platte (47) in Bezug auf die Bodenwand (23) beweglich gelagert ist und mit einem Stellorgan wie einer Schraube (49) betätigt wird, wobei die Schraube (49) zwischen die Platte (47) und einen fest mit der Bodenwand (23) verbundenen Lappen (50) gesetzt ist.

12. Vorrichtung nach einem der Ansprüche 1 bis 11, bei welcher der Transitkanal (20) durch Gleitflächen begrenzt wird, die eine Bodenwand (23) und eine Stirnwand (26) umfassen, die parallel zueinander sind, wobei die Vorrichtung einen Anpassungsmechanismus (101) umfasst, der dazu ausgestaltet ist, die Stirnwand (26) in Bezug auf die Bodenwand (23) entlang einer im Wesentlichen senkrecht zur Bodenwand (23) verlaufenden Anpassungsrichtung zu verlagern, so dass eine Höhe des Transitkanals (20) zwischen einer maximalen Höhe und einer minimalen Höhe geändert wird.

13. Vorrichtung nach den Ansprüchen 4, 8 und 12 zusammengenommen, bei welcher der Anpassungsmechanismus (101) dazu ausgestaltet ist, die Stirnwand (26), den Fingerträgerflansch (36, 36') und den Rückstellnocken (38, 38') um den gleichen Anpassungsabstand zu verlagern.

## Claims

1. Selection and sorting device (15) for sealing elements or hollow caps intended for a capping station (4), said device being in the form of a chute consisting of two portions: a feed portion (17) and an exit portion (18), and, between these two portions, a transfer channel (20) forming an arc and comprising an ejection window (33), said transfer channel (20) partially enclosing a wheel (21) having notches (22) which are adapted to the size of said caps (2), said wheel (21) being associated with pins (30), **characterized in that**:
- said exit portion (18) is intended to be connected to the capping station (4),
- said pins (30) have the function of retaining said caps (2) in their respective notch (22) as the caps pass in front of said ejection window (33), when the caps are properly oriented and non-defective,
- the exit portion (18) is intended to convey said properly oriented and non-defective caps,
- said pins (30) for retaining the caps (2) are movable between two stable positions:
∘a stable active position which retains said caps (2) in their notch (22), in which an end (31) of the corresponding pin (30) enters the hollow of said cap (2), and
∘a stable inactive position in which said caps(2) are not retained, said stable inactive position of the pins (30) being located at a distance transverse to the transfer channel (20) such that the corresponding cap is in no way retained by the pin (30).

2. Device according to claim 1, wherein the ejection window (33) is located in a lower part of said device (15), such that said caps (2) that arrive at the ejection window (33) and are not retained by a pin (30), fall through the ejection window (33) due to the effect of their own weight.

3. Device according to claim 1 or 2, wherein said stable inactive position is reached automatically by a reaction when the end (31) of the corresponding pin (30) encounters an inverted cap (2), said inverted cap preventing said end (31) from entering the hollow of said cap (2) and causing an immediate withdrawing motion of said pin (30) until said pin reaches said stable inactive position.

4. Device according to any one of claims 1 to 3, **characterized in that** it comprises a positive drive mechanism for the wheel (21) with notches, and a pin-supporting flange (36, 36') which is disposed and attached to a drive shaft (29) for the wheel (21) with notches.

5. Device according to claims 1 and 4 in their whole, wherein the transfer channel (20) is delimited by slide surfaces comprising a back wall (23) and a front wall (26) which are parallel to each other, and wherein the axis of said drive shaft (29) common to the wheel (21) with notches and to the pin-supporting flange (36, 36'), is inclined relative to the normal of the back wall (23), in a direction such that the plane of a circle formed by the ends of said pins (30) intersects the slide surface of the front wall (26) along a line which clearly passes above the ejection window ends.

6. Device according to claim 4 or 5, wherein the pin-supporting flange (36') comprises two disks (52, 53) of magnetic material which are parallel to each other and which are equipped with guiding means for guiding the pins (30), said pins (30) being each consistuted of a rod (55) of non-magnetic material which is mounted to freely move translationally within at least one of the disks (52, 53), in an axial direction, and each pin (30) comprises a permanent magnet (56) attached to said rod (55), said pin (30), with its magnet (56), floating between the two disks (52, 53).

7. Device according to claim 6, wherein the pin (30) comprises a spacer (57) of non-magnetic material arranged axially between the magnet (56) and each of the two disks (52, 53), said spacer (57) allowing the adjustment of the distance of the magnet (56) relative to each disk (52, 53), said distance being greater between said magnet (56) and the disk (52) on the caps side than between said magnet (56) and the other disk (53).

8. Device according to any one of the preceding claims, comprising a reset cam (38, 38') for resetting the pins (30), said reset cam (38, 38') being able to return pins which are located outside an area of the ejection window (33), from the stable inactive position to the stable active retaining position.

9. Device according to claim 8, wherein the pins (30) each have a reset end (32) which is at the opposite end from a retaining end (31), said reset ends being located, when the retaining ends (31) are inactive, in a plane which intersects a plane of the reset cam (38, 38') above the level of the ejection window (33) ends, causing said pins (30) to return to their position automatically as they rotate with the wheel (21) with notches and comes into contact with said reset cam (38, 38').

10. Device according to any one of claims 1 to 9, wherein the exit portion (18) comprises an exit chute (18) having a height (H) that can be adjusted by means of sections, in order to delivering the caps (2) at an appropriate level, said device comprising a feed chute (17) of a height chosen so as to accumulate a certain amount of caps (2) and to be able to drive and control the operation of said wheel (21) with notches, said control comprising a detection system which makes use of a sensor (19) to detect the presence of caps (2), said detection system being located upstream from said wheel (21) with notches, along said feed chute (17) .

11. Device according to any one of claims 1 to 10, wherein the transfer channel (20) is delimited by slide surfaces comprising a back wall (23) and a front wall (26) which are parallel to each other, and wherein the back wall (23) comprises a panel (47) which can be moved to allow emptying the transfer channel (20),and in particular to allow the removal of caps (2) retained by the pins (30) and possibly caps in the exit chute (18) and/or the feed chute (17), said panel (47) being mounted to move relative to the back wall (23) and being actuated by an actuating means, such as a screw (49), said screw (49) being inserted between said panel (47) and a tab (50) that is integral with said back wall (23) .

12. Device according to any one of claims 1 to 11, wherein the transfer channel (20) is delimited by slide surfaces comprising a back wall (23) and a front wall (26) which are parallel to each other, said device comprising an adjustment mechanism (101) designed to move the front wall (26) relative to the back wall (23) in an adjustment direction substantially perpendicular to the back wall (23), in a manner that varies the height of the transfer channel (20) with respect to the adjustment direction between a maximum height and a minimum height.

13. Device according to claims 4, 8 and 12 taken in their whole, wherein the adjustment mechanism (101) is designed to move the front wall (26), the pin-supporting flange (36, 36'), and the reset cam (38, 38') by a same adjustment distance.
